# FASCICULE DE BREVET EUROPEEN

(11) **EP 3 169 152 B1**
(45) Date de publication et mention de la délivrance du brevet: **16.03.2022**
(21) Numéro de dépôt: 15753113.8
(22) Date de dépôt: 16.07.2015
(51) Int. Cl.: A01K 47/00, A47B 96/20

(54) **PROCÉDÉ DE RÉALISATION DE MODULES EN FIBRES NATURELLES POUR LA RÉALISATION DE PIÈCES EN DEUX OU EN TROIS DIMENSIONS**
VERFAHREN ZUR HERSTELLUNG VON MODULEN NATÜRLICHER FASERN ZUR HERSTELLUNG ZWEI- ODER DREIDIMENSIONALER TEILE
METHOD FOR PRODUCING MODULES OF NATURAL FIBRES IN ORDER TO PRODUCE TWO-DIMENSIONAL OR THREE-DIMENSIONAL PARTS

(30) Priorité: 17.07.2014 FR 1456893
(43) Date de publication de la demande: 24.05.2017
(73) Titulaire: Raud, Olivier, 65700 Lahitte Toupiere (FR); Flurin, Catherine, 65700 Lahitte Toupiere (FR)
(72) Inventeur: Raud, Olivier, 65700 Lahitte Toupiere (FR); Flurin, Catherine, 65700 Lahitte Toupiere (FR)
(74) Mandataire: A.P.I. Conseil
(86) Numéro de dépôt international: PCT/FR2015/051962
(87) Numéro de publication internationale: WO 2016/009160

(56) Documents cités:
- EP-A1- 0 446 160
- WO-A2-2011/027993
- FR-A1- 2 539 580
- FR-A1- 2 639 793
- US-A- 1 441 524

## Description

### [Domaine de l'invention]

L'invention concerne le domaine de l'exploitation d'éléments en fibres naturelles, et plus particulièrement celui de la réalisation de modules en éléments de fibres naturelles pour la fabrication de pièces en deux ou en trois dimensions utilisées dans le domaine de la construction de bâtiments ou de meubles. L'invention s'applique notamment à la fabrication de produits tels que des ruches, des sommiers de lit.

### [Art antérieur]

On entend par éléments en fibres naturelles notamment des planches de bois ou des fils textiles. On s'intéresse ici plus particulièrement aux fibres naturelles d'origine végétale et plus particulièrement aux éléments en fibres naturelles d'origine végétale tels que des fils en fibres naturelles d'origine végétale ou tels que des pièces de bois comme des planches en bois, ou des poutres en bois ou des traverses en bois. Par exemple, le document WO2011/027993 décrit une méthode de réalisation de produits en bois laminé, tels que des panneaux, des tables, des colonnes, à partir d'éléments en bois sous forme de planches de bois. Cette méthode peut comprendre des étapes de préparation, de laminage, et de découpe des éléments en bois afin de fabriquer le produit final. Le document décrit en particulier la réalisation de structure en damier ayant une esthétique de type marqueterie présentant une bonne résistance mécanique.

Les pièces en deux ou trois dimensions fabriquées à partir d'éléments en fibres naturelles tels que des planches de bois ou des poutres sont couramment utilisées dans le bâtiment pour la construction d'habitations. La réalisation de modules d'éléments en fibres naturelles permet d'accélérer la construction et de la rendre plus aisée [04] Cependant, ces habitations ont souvent des problèmes d'isolation thermique et d'humidité, la température étant le plus souvent mal régulée et l'humidité beaucoup trop élevée. Les isolants utilisés se présentent généralement en plaques d'éléments isolants tels que le polystyrène ou de plaques recouvertes d'une couche d'éléments isolants ou de couches de fibres de verre déposées ou insérées entre les parois d'une construction. En plus des inconvénients précédemment cités, ces plaques doivent être mises en place sur l'ensemble de la construction, ce qui est souvent long et fastidieux.

Dans le domaine de la fabrication des vêtements, il existe des textiles techniques se présentant sous forme de tricots, tissus, non tissés, cordes, tresses, constitués de fibres dites fibres techniques, ayant les caractéristiques recherchées pour une ou des applications bien déterminée(s) comme non-feu, résistance mécanique, conductivité électrique, antistatisme, protection, isolation, anticoupure, etc.). Il s'agit de textiles réalisés au moyen de fibres de synthèse réalisées dans un matériau ayant les propriétés recherchées ou comportant des particules ou nanoparticules ayant les dites propriétés. Cependant, les procédés de fabrication de ces textiles et les textiles ainsi fabriqués contribuent à la dégradation de l'environnement et ont un impact sur l'empreinte écologique non négligeable.

Les problèmes de température et d'humidité se rencontrent notamment dans la fabrication des ruches. On rappelle qu'une ruche est le plus souvent de type Dadant ou Langstroth et est constituée de plusieurs pièces de bois telles que le plancher, le corps, la hausse, le couvre cadre, le nourrisseur et le toit. Ces pièces sont fixées entre elles par des vis ou avec de la colle à bois. Les ruches sont fabriquées par empilement de ces différentes pièces.

Il existe aujourd'hui de nombreuses ruches permettant de répondre au problème de régulation de la température, telle que celle qui fait l'objet du brevet FR2539580. La ruche est composée d'une paroi simple ou double incluant une matière isolante telle que du polystyrène, permettant ainsi une meilleure isolation ainsi qu'une meilleure étanchéité.

Selon une réalisation décrite dans le brevet FR2639793, les parois isolantes peuvent être insérées dans des montants constituant la ruche et prévus à cet effet. L'inconvénient est qu'il faut connaître le type d'isolant adapté à la ruche réalisée, et que l'assemblage de cette couche isolante nécessite une étape de montage supplémentaire. Par ailleurs le résultat n'est pas toujours concluant et il est fréquent d'obtenir des ruches dans lesquelles la température et l'humidité sont très élevées, diminuant la productivité des abeilles.

### [Problème technique]

L'invention a donc pour but de remédier à au moins un des inconvénients de l'art antérieur. En particulier, l'invention vise à permettre une régulation de la température et une diminution de l'humidité dans les constructions et pour les textiles par l'utilisation de modules fabriqués à partir d'éléments en fibres naturelles ayant une orientation particulière à savoir le sens de croissance des fibres naturelles.

On entend par « sens de croissance des fibres naturelles », le sens de croissance de la plante ou de l'arbre dont les fibres naturelles sont issues. Cette croissance se produit dans le sens racine/pied de la plante/de l'arbre vers le sommet/tête, mais aussi pour les arbres du cœur vers l'écorce. Le sens de croissance correspond à une orientation et ne doit pas confondu avec le sens du fil du bois qui n'exprime qu'une direction sans orientation, et en particulier sans orientation pied- tête ou tête- pieds de l'arbre/plante.

On entend par fibres naturelles des fibres obtenues à partir de plantes c'est-à-dire des fibres d'origine végétales.

On entend par éléments en fibres naturelles des fibres d'origine végétale telles que des fils en fibres naturelles d'origine végétale ou telles que des pièces de bois comme des planches en bois, ou des poutres en bois, des traverses en bois.

La solution proposée selon l'invention permet d'avoir une régulation de la température et une diminution de l'humidité qui, avantageusement, ne nécessite pas l'utilisation d'appareils de chauffage ou de refroidissement consommant beaucoup d'énergie ou des isolations couteuses.

En outre aspect, pas compris dans l'invention, permettre une régulation de la température du corps humain, en permettant une meilleure régulation de la transpiration. L'invention vise également à améliorer la circulation des fluides du corps humain à savoir à améliorer la circulation du sang et la transpiration. Ces problèmes sont résolus par la présente invention au moyen de modules fabriqués à partir d'éléments en fibres naturelles ayant une orientation particulière décrite plus en détail dans la suite est illustré par différentes réalisations.

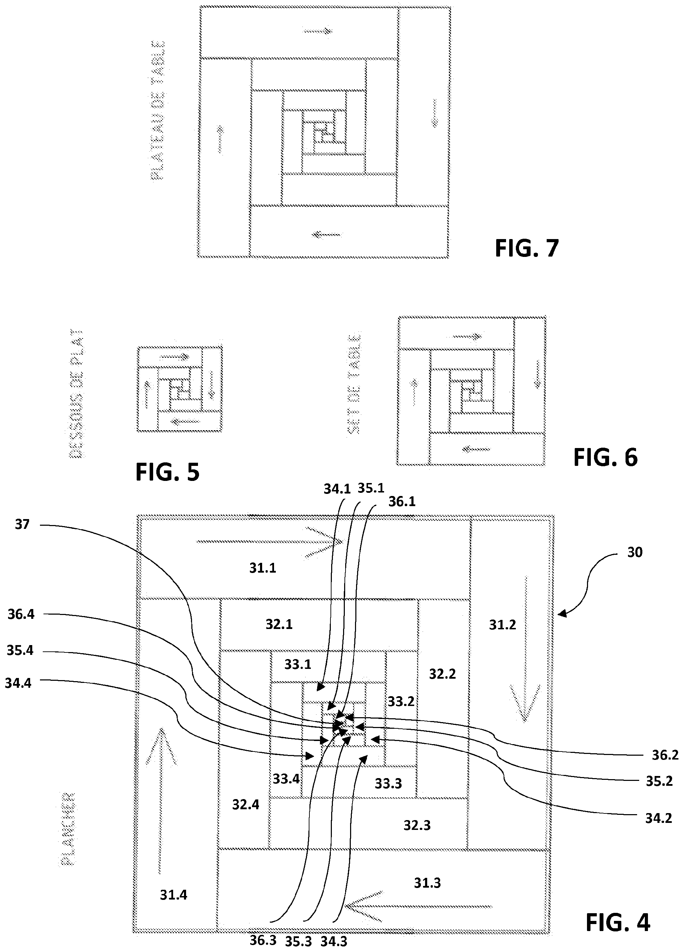

Dans le document WO 2011/027993 (D1) une méthode de réalisation de produits en bois laminé, tels que des panneaux, des tables, des colonnes, à partir d'éléments en bois sous forme de planches de bois est décrite. Cette méthode comprend alternativement des étapes de préparation, de laminage, et de découpe des éléments en bois afin de fabriquer le produit final. En particulier, lors de l'étape de préparation, les éléments en bois sont positionnés de sorte que les surfaces de chaque élément comprenant les cernes du bois soient situées selon un premier axe, et que les surfaces de chaque pièce de bois comprenant le grain du bois soient situées selon un deuxième axe, formant des panneaux (Figure 6). Le document décrit la réalisation de structure en damier ayant une esthétique de type marqueterie qui de plus présente une bonne résistance mécanique. Cependant, il n'est ni décrit ni suggéré dans ce document de résoudre le problème technique soulevé et résolu par la présente invention. A fortiori, il n'est ni décrit ni suggéré de réaliser des modules à partir d'éléments en fibres naturelles, de disposer lesdits éléments en fibres naturelles parallèlement et de les orienter dans le même sens qui est celui de la croissance des fibres naturelles puis d'assembler lesdits éléments en fibres naturelles entre eux pour former des modules. Le sens de croissance correspond à une orientation et ne doit pas être confondu avec le sens du fil du bois décrit dans le document WO 2011/027993 qui n'exprime qu'une direction sans orientation, et en particulier sans orientation pied- tête ou tête- pieds de l'arbre/plante comme proposé dans la présente invention.

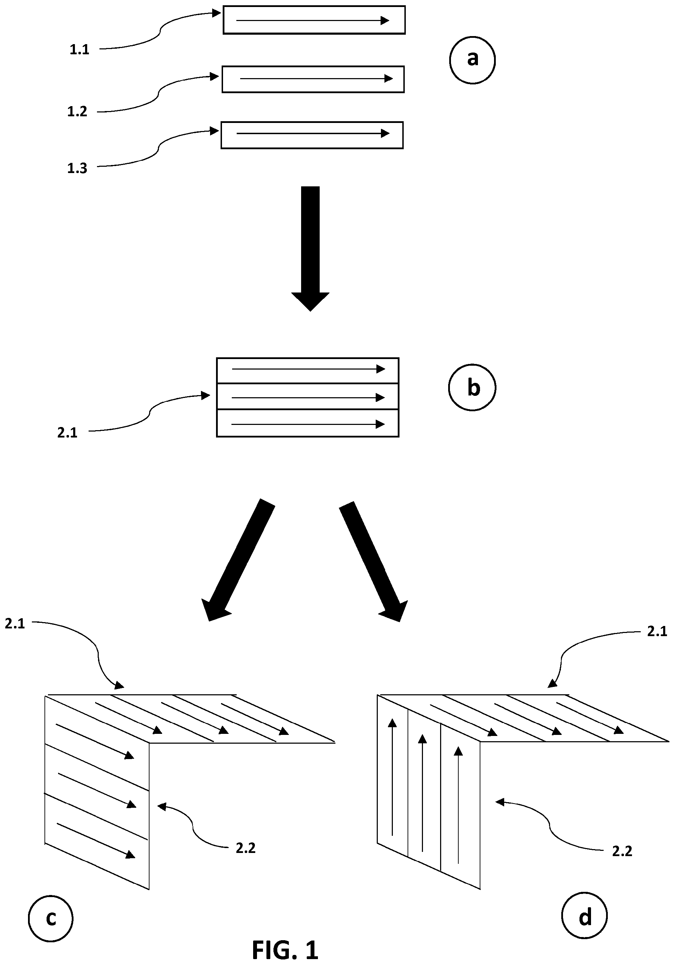

Dans le document EP 0 446 160 (D2) un procédé de fabrication de dessus de tables et de bahuts massifs est décrit. Ces éléments sont fabriqués à partir de plusieurs panneaux de bois ou éléments en bois superposés en respectant le sens du fil du bois, afin de fabriquer un module en bois tel que celui représenté sur la Figure 1. Des traverses sont placées entre les deux panneaux de bois ou dans des rainures prévues dans les panneaux de bois, selon un sens opposé au fils du bois des panneaux, afin de rigidifier la structure du module en bois obtenu. Tout comme dans le document WO 2011/027993, ce document EP 0 446 160 décrit une structure permettant d'avoir une résistance mécanique augmentée par la présence des traverses. Il n'est ni décrit ni suggéré dans ce document de résoudre le problème technique soulevé et résolu par la présente invention. A fortiori, il n'est ni décrit ni suggéré de réaliser des modules à partir d'éléments en fibres naturelles, de disposer lesdits éléments en fibres naturelles parallèlement et de les orienter dans le même sens qui est celui de la croissance des fibres naturelles puis d'assembler lesdits éléments en fibres naturelles entre eux pour former des modules. Tout comme dans le document précédent (WO 2011/027993), les éléments en bois se présente selon le fil du bois, le sens du fil du bois n'exprimant qu'une direction sans orientation comme décrit ci-après dans la présente invention.

### [Brève description de l'invention]

Pour résoudre le problème de régulation de la température et de l'humidité, le déposant a cherché à réaliser des modules par assemblage d'éléments en fibres naturelles. Et, c'est après plusieurs essais expérimentaux, que le déposant s'est rendu compte que l'association d'éléments en fibres naturelles entre eux selon le sens de croissance desdites fibres permettait une régulation de la température ainsi qu'une diminution de l'humidité pour des constructions ou pour des vêtements. Un assemblage d'éléments en fibres naturelles dans lequel tous les éléments formant l'ensemble sont orientés selon le sens de croissance desdites fibres permet une régulation de la température par exemple à l'intérieur d'une construction réalisée avec de tels ensembles. A cette régulation de la température s'ajoute une et de diminuer l'humidité.

Le déposant a poursuivi ses essais en réalisant des dispositifs encore dénommés pièces à deux ou à trois dimensions ayant des fonctions différents, à savoir : des ruches, des dessus de tables, des lits, des armoires, en respectant pour chaque module utilisé pour la fabrication de ces dispositifs, le sens de croissance des éléments en fibre naturelles, de sorte que les modules soient constitués d'éléments en fibre naturelle tous positionnés dans le même sens qui est celui de la croissance desdites fibres naturelles. Certains des dispositifs réalisés notamment les lits, visent en outre à permettre une régulation de la température du corps humain, en permettant une meilleure régulation de la transpiration. Ces dispositifs visent également à améliorer la circulation des fluides du corps humain à savoir à améliorer la circulation du sang et la transpiration.

A cet effet, l'invention a plus particulièrement pour objet un procédé de réalisation de modules pour la fabrication de pièces en deux dimensions ou en trois dimensions, lesdits modules comprenant des éléments en fibres naturelles, principalement caractérisé en ce qu'il comporte, les étapes suivantes :
Pour chaque module,
a) disposer lesdits éléments en fibres naturelles parallèlement et les orienter dans le même sens qui est celui de la croissance des fibres naturelles,
b) assembler lesdits éléments en fibres naturelles entre eux pour former un module.

L'association des éléments en fibres naturelles selon le sens de la croissance des fibres permet de réduire la température et l'humidité. On se rend alors compte que ce résultat n'est obtenu que par une orientation déterminée des éléments entre eux sans apport d'éléments ayant une structure ou des propriétés autres que celles connues de l'homme du métier. Chaque module réalisé comprend des éléments en fibres naturelles ayant la même direction qui est le sens de croissance des fibres naturelles. Ainsi, pour des modules comprenant un assemblage des planches en bois, les planches seront orientées dans le même sens qui est celui de la croissance de l'arbre. Pour des modules comprenant un assemblage de fibres naturelles telles que des fibres de lin ou de soie d'origine végétale ou de chanvre ou équivalent, les fibres seront toutes orientées dans le même sens qui est celui de la croissance des plantes dont elles sont issues.

Selon d'autres caractéristiques optionnelles :
- Les éléments en fibres naturelles des modules sont des fils en fibres naturelles d'origine végétale ;
- Les éléments en fibres naturelles des modules sont des pièces en bois choisi parmi les planches en bois ou les poutres en bois ou les traverses en bois.

L'invention a également pour objet des pièces en deux dimensions ou en trois dimensions en fibres naturelles comprenant un ou plusieurs modules réalisé(s) selon le procédé décrit ci-dessus.

L'invention s'applique à la réalisation de ruche comportant des pièces en bois comprenant un ou plusieurs modules tels que définis précédemment.

Avantageusement, la ruche comprend une pièce constituant le plancher, une pièce constituant le corps, une pièce constituant la hausse, une pièce constituant le couvre cadre, une pièce constituant le nourrisseur, une pièce constituant le toit.

L'invention s'applique également à la réalisation de dalles, de dessous de plat, de sets de table comprenant des pièces comportant un ou plusieurs modules tels que définis précédemment.

L'invention s'applique à la réalisation d'un plateau de table comporte des pièces comprenant des modules tels que définis précédemment.

L'invention s'applique avantageusement à la réalisation de vêtements comportant des pièces comprenant des modules dans lesquels les éléments en fibres naturelles sont des fils en fibres naturelles.

L'invention s'applique également à la réalisation de lits comprenant une ou plusieurs pièces comportant des modules tels définis précédemment.

D'autres particularités et avantages apparaitront à la lecture de la description suivante faite à titre illustratif et non limitatif, en référence aux figures annexées qui représentent :
- La figure 1, un schéma du procédé de réalisation de plusieurs éléments en fibres naturelles en modules, puis l'assemblage de plusieurs modules en pièces deux dimensions ou trois dimensions ;
- La figure 2, un schéma d'une ruche assemblée avec les pièces de l'invention ;
- La figure 3, un schéma d'un nourrisseur en vue de dessus, réalisé selon l'invention ;
- Les figures 4 à 7, des schémas respectivement d'un plancher, d'un dessous de plat, d'un set de table et d'un plateau de table réalisés selon l'invention ;
- Les figures 8 et 9, des schémas d'association de fils textiles et d'un vêtement pas compris dans l'invention. ;
- La figure 10, le schéma de réalisation d'un lit,

Le demandeur propose donc une solution alternative pour résoudre les problèmes de température et d'humidité rencontrés dans la fabrication de constructions. Une solution est apportée pour les ruches mais également dans les domaines de la construction de bâtiments et de pièces fabriquées à partir desdits modules.

Jusqu'ici, et cela quel que soit le produit, aucune attention n'est accordée quant au sens d'association des éléments en fibres naturelles entre eux. Au contraire, le Déposant s'est intéressé aux caractéristiques résultant de l'orientation des fibres naturelles pour une pièce réalisée avec des fibres naturelles et a constaté, après des essais, que lorsque l'on dispose les éléments en fibres naturelles parallèlement et que l'on oriente lesdits éléments dans le même sens qui est celui de la croissance des fibres naturelles de l'élément, que l'on obtient une régulation de la température et de l'humidité. Le déposant a constaté également que des pièces ou dispositifs réalisés avec des modules dans lesquels les éléments en fibre naturelles sont disposés parallèlement et orientés selon le sens de croissance de la plante ou de l'arbre dont elles sont issues permettait une régulation de la température du corps humain, par une meilleure régulation de la transpiration. Ces dispositifs, pas compris dans l'invention, visent également à améliorer la circulation des fluides du corps humain à savoir à améliorer la circulation du sang et la transpiration.

Dans la suite, les indications « Pied » et « Tête » font référence au pied et à la tête de la plante ou de l'arbre permettant ainsi d'indiquer le sens de croissante. Ces indications apparaissent sur les figures et sont en outre, illustrée par des flèches.

### [Description détaillée de l'invention]

**La** **figure 1** représente un schéma qui illustre les étapes du procédé d'assemblage de plusieurs éléments en fibres naturelles 1.1, 1.2, 1.3, ces éléments étant orientés parallèlement entre eux et selon le sens de croissance des fibres qui les composent (étape a). Les éléments 1.1, 1.2, 1.3 sont ensuite assemblés entre eux (étape b) pour former un module 2.1. Chaque module est formé d'au moins deux éléments. Les modules 2.1 et 2.2 sont assemblés pour former une pièce en deux dimensions ou en trois dimensions (étape c). Chaque pièce est formée d'au moins deux modules, comme indiqué par le schéma.

De manière facultative, les modules 2.1 et 2.2 peuvent être assemblés de façon perpendiculaire entre eux (étape d) : les éléments en fibres naturelles 1.1, 1.2, 1.3 du premier module 2.1 sont toujours parallèles entre eux, mais sont cette fois-ci perpendiculaires aux éléments en fibres naturelles 1.1, 1.2, 1.3 du module 2.2.

Plusieurs exemples de mise en œuvre du procédé sont donnés ci-après. Les premiers exemples concernent l'utilisation du procédé pour la réalisation de pièces en bois.

### 1^{er} Exemple avec pièce en bois:

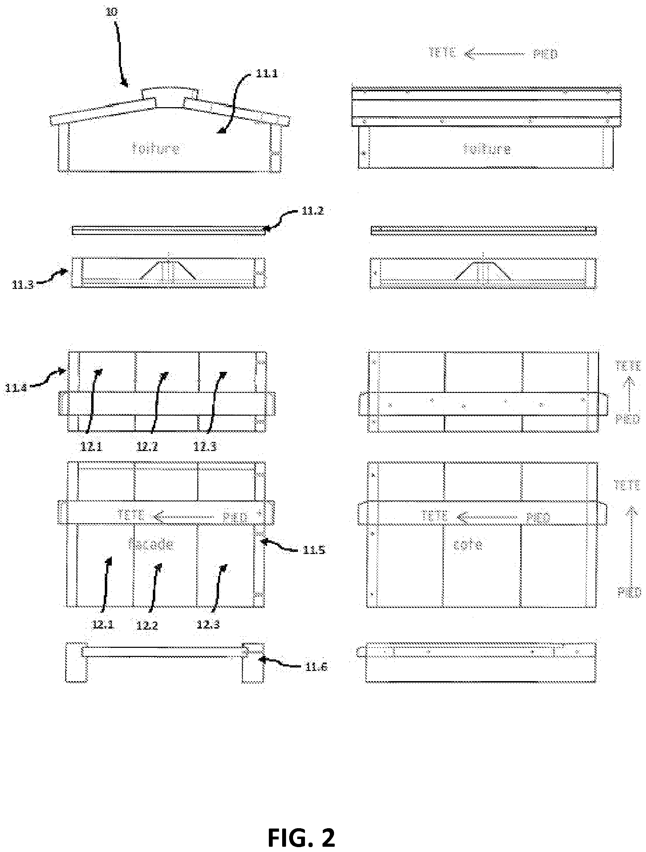

**La** **figure 2** représente une ruche 10 réalisée à partir de pièces obtenues selon l'invention. La ruche comprend un toit 11.1, un couvre-cadre 11.2, un nourrisseur 11.3, une hausse 11.4, un corps 11.5, et un plancher 11.6. Pour former le corps 11.5, les planches de bois 12.1, 12.2, 12.3 sont assemblées en au moins un module de manière à être parallèles entre elles et toutes orientées dans le sens de la croissance des fibres du bois, du bas vers le haut, de manière à reproduire la pousse de l'arbre.

Les planches de bois sont en effet orientées selon leur extrémité haute correspondant à la cime de l'arbre et leur extrémité basse correspondant au pied de l'arbre, le sens de croissance des fibres de bois allant de l'extrémité basse vers l'extrémité haute de la planche de bois. Une planche 12.4 est assemblée perpendiculairement aux trois autres, le sens de croissance des fibres de bois de la planche 12.4 étant orienté vers la gauche et perpendiculaire à celui des fibres de bois des planches 12.1, 12.2, 12.3.

La hausse est assemblée de la même façon que le corps : les planches de bois 12.1, 12.2, 12.3 sont assemblées en un ou plusieurs modules de manière à être parallèles entre elles et toutes dans le sens de la croissance des fibres du bois, du bas vers le haut, de manière à reproduire la pousse de l'arbre. Une planche 12.4 est assemblée perpendiculairement aux trois autres, le sens de croissances des fibres de bois de la planche 12.4 étant orienté vers la gauche et perpendiculaire à celui des fibres des planches 12.1, 12.2, 12.3.

### 2^{e} Exemple avec pièce de bois:

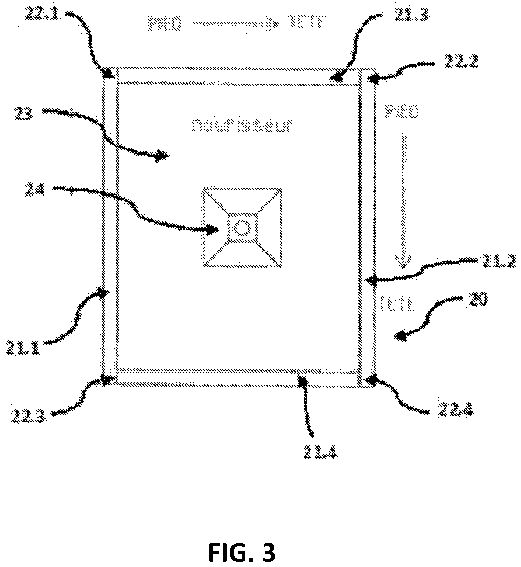

Le nourrisseur 20 est représenté en vue de dessus **figure 3****.** Ledit nourrisseur est composé de deux montants latéraux 21.1 et 21.2 et de deux montants transversaux 21.3 et 21.4, les quatre montants étant fixés à un fond 23. Les montants latéraux sont parallèles entre eux et orientés dans le même sens qui est celui de la croissance des fibres de bois. Les montants transversaux sont également parallèles entre eux et orientés dans le même sens qui est celui de la croissance des fibres de bois. Les montants latéraux sont plus grands que les montants transversaux, les angles 22.1, 22.2, 22.3, 22.4 du nourrisseur 20 sont alors formés par les extrémités des montants latéraux. Les montants latéraux et transversaux sont perpendiculaires entre eux. Au centre du fond 23 est fixée une cheminée 24 servant d'entrée pour nourrir les abeilles.

### Autres exemples avec pièces de bois:

**La** **figure 4** représente une dalle de plancher 30 obtenue selon l'invention, dont la structure est identique à celle d'un dessous de plat figure 5, d'un set de table figure 6 ou d'un plateau de table figure 7 qui sont d'autres pièces pouvant être obtenues selon l'invention.

La dalle de plancher comprend des pièces de bois comprenant des modules réalisés selon le procédé. Les modules comportent un assemblage de planches de bois orientées selon les sens de croissance de l'arbre à partir duquel elles ont été obtenues et comme illustré par les flèches. Ainsi, un premier module comprend l'assemblage des planches 31.1, 32.1 à 36.1 ; un deuxième module comprend l'assemblage des planches 31.2, 32.2 à 36.2, un troisième module comprend l'assemblage des planches 31.3, 32.3 à 36.3 et un quatrième module comprend l'assemblage des planches 31.4, 32.4 à 36.4.

Les pièces ainsi obtenues sont assemblées de sorte que la dalle de plancher présente une structure carrée. En outre il y a une continuité du sens de croissance des éléments en fibre naturelle qui forme ainsi une boucle, comme on peut le voir en suivant les flèches sur les figures 4, 5 et 6.

Visuellement, et de façon pratique, les planches 31.1 et 31.3 sont parallèles entre elles et orientées en sens opposé selon la croissance des fibres de bois. Les planches 31.2 et 31.4 sont également parallèles entre elles et orientées en sens opposé selon la croissance des fibres de bois. En pratique, les planches 31.1 et 31.3 sont perpendiculaires aux planches 31.2 et 31.4 et sont dans la configuration suivante:
- L'extrémité haute de la planche 31.1 est en butée contre l'extrémité basse de la planche 31.2.
- L'extrémité haute de la planche 31.2 est en butée contre l'extrémité basse de la planche 31.3.
- L'extrémité haute de la planche 31.3 est en butée contre l'extrémité basse de la planche 31.4.
- L'extrémité haute de la planche 31.4 est en butée contre l'extrémité basse de la planche 31.1.

Les planches 32.1 à 32.4 sont disposées de manière identique aux planches 31.1 à 31.4, et dans l'espace interne créé par ces dernières. Les planches 33.1 à 33.4 sont disposées de manière identique aux planches 32.1 à 32.4, et dans l'espace interne créé par ces dernières. Les planches 34.1 à 34.4 sont disposées de manière identique aux planches 33.1 à 33.4, et dans l'espace interne créé par ces dernières. Les planches 35.1 à 35.4 sont disposées de manière identique aux planches 34.1 à 34.4, et dans l'espace interne créé par ces dernières. Les planches 36.1 à 36.4 sont disposées de manière identique aux planches 35.1 à 35.4, et dans l'espace interne créé par ces dernières. L'assemblage se termine par le centre de la dalle 37.

### Exemple avec fils textiles en fibres naturelles.

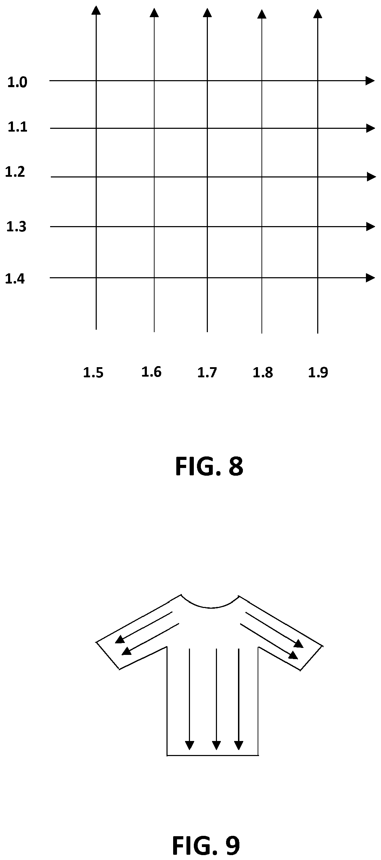

Selon cet exemple illustré par **la** **figure 8****,** on a 2 ensembles de fils : 1.0 à 1.4 et 1.5 à 1.9 qui forment chacun un module dont les fibres naturelles sont toutes orientées selon le sens de croissance des fibres (sens de croissance des plantes à partir desquelles lesdites fibres sont obtenues).

Ainsi, la figure 8, pas compris dans l'invention, représente des fils textiles tissés et orientés selon le procédé de la présente invention. Les fils utilisés sont formés de fibres naturelles telles que des fibres de lin ou de soie d'origine végétale ou de chanvre ou de toute autre fibre naturelle d'origine végétale. Les fils 1.0 à 1.4 sont tissés de manière à être parallèles entre eux et orientés dans le même sens qui est celui de la croissance des fibres. Les fils 1.5 à 1.9 sont également tissés de manière à être parallèles entre eux et orientés dans le même sens qui est celui de la croissance des fibres. Les fils 1.0 à 1.4 forment un premier module et les fils 1.5 à 1.9 forment un deuxième module. Dans le cas d'un tissage des fils formant chaque module, les fils du premier module 1.0 à 1.4 sont perpendiculaires aux fils 1.5 à 1.9 du deuxième module.

**La** **figure 9** représente un vêtement 40, pas compris dans l'invention, obtenu par assemblage de pièces. Pour des questions de simplification on a illustré uniquement les fils orientés du centre du vêtement vers les extrémités de chaque module utilisés pour la réalisation du vêtement. Bien évidemment, le vêtement comporte des pièces telles que des manches constituées de modules, et telles que le dos et l'avant constitués également de modules. Les pièces constitutives du vêtement comportent des modules comme illustrés par la figure 8 dont les éléments en fibres naturelles sont orientés selon le sens de croissance desdites fibres.

### Autres exemples avec pièces de bois

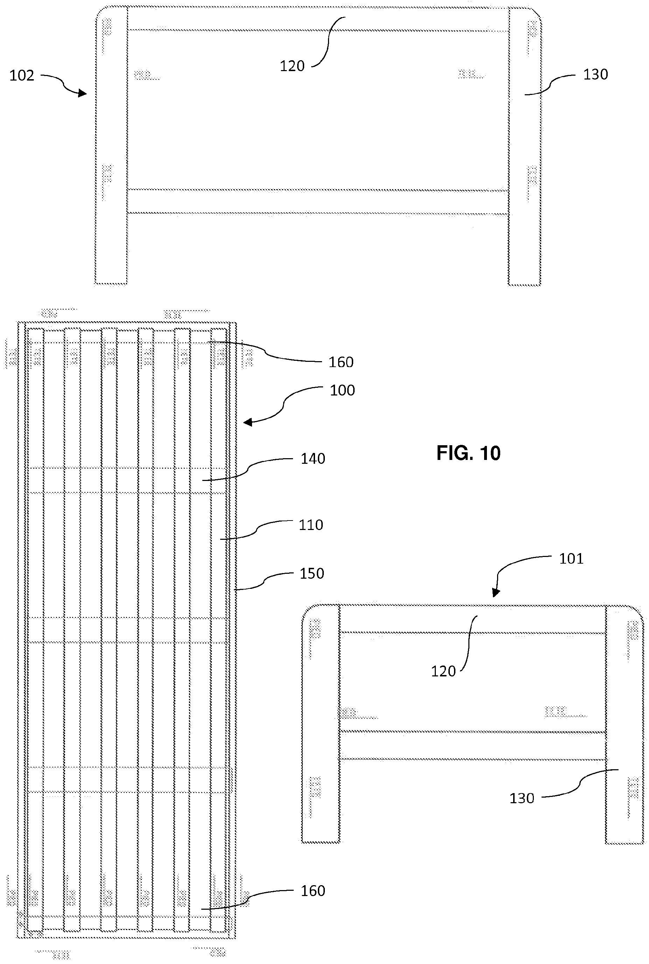

La **figure 10** représente un lit. Le lit comprend différentes pièces, un sommier 100, un pied de lits ou « petit dossier » 101, une tête de lit ou « grand dossier » 102, un cadre sur lequel repose le sommier comportant des montants longitudinaux 150 et transversaux 160, des traverses 140 support du sommier reposant sur les montants longitudinaux 150.

Le sommier 100 constitue un module formé d'un assemblage de planches 110 disposées et assemblées les unes aux autres selon le sens de croissance de l'arbre dont elles sont issues à savoir pied de l'arbre vers la tête de l'arbre.

Les montants longitudinaux 150 formant le cadre sont disposés selon le même sens que les planches du sommier et constituent un autre module dans la mesure où on procède également à un assemblage mécanique des éléments constituant ledit module à savoir un assemblage mécanique des deux montants longitudinaux. Dans cet exemple particulier l'assemblage est fait au moyen des montants transversaux 160 qui constituent pour les mêmes raisons un autre module. Les montants transversaux et longitudinaux sont disposés de manière à avoir une continuité du sens de croissance, l'extrémité tête d'un montant longitudinal 150 étant rattachée à une extrémité pied d'un montant transversal 160, selon le sens des flèches indiquées sur la figure 10.

Les pièces 101 constituant le pied du lit et 102 constituant la tête de lit comporte chacune des montants horizontaux 120 et verticaux 130. Les montants verticaux sont orientés dans le même sens, ce sens étant le sens de croissance de l'arbre dont ils sont issus. De la même façon, les montants horizontaux 160 sont orientés dans le même sens, ce sens est le sens de croissance de l'arbre dont ils sont issus. En outre, l'assemblage des montants verticaux constituant un premier module est réalisé au moyen de l'assemblage des montants horizontaux constituant le deuxième module.

L'assemblage des éléments en fibres naturelles lorsque ces éléments sont en bois peut être fait avantageusement par de la colle à bois et/ou par emboitement des éléments les uns aux autres ou par des pièces de liaison.

L'invention s'applique à toutes les applications, dès lors qu'il s'agit d'obtenir une régulation de la température et de l'humidité. L'invention s'applique avantageusement à la réalisation de lits, d'habitats, de planchers, de sommiers lits, de ruches, abris d'autres animaux, de tables de massage, de garde-manger ou d'affineurs ou dynamiteurs d'aliments ou de boissons, fontaine à eau, dès lors que l'on cherche à avoir une température régulière sans avoir à chauffer ni refroidir avec des appareils énergétivore ou des isolations couteuses.

En effet, dans toutes ces applications l'invention permet de résoudre le problème à savoir apporter une régulation de la température et de l'humidité ce qui est d'autant plus avantageux lorsque l'énergie est couteuse et que l'isolation est difficile à réaliser.

L'invention propose en outre une solution respectueuse de l'environnement et de l'esthétique, nouvelle, et peu couteuse assurant un confort de température et d'humidité.

L'invention permet en outre d'avoir une température régulière sans avoir à chauffer ni refroidir avec des appareils énergétivores ou des isolations couteuses.

## Revendications

1. Procédé de réalisation de modules pour la fabrication de pièces en deux dimensions ou en trois dimensions en bois, lesdits modules comprenant des éléments en fibres naturelles, **caractérisé en ce qu'**il comporte les étapes suivantes :
Pour chaque module,
a) disposer lesdits éléments en fibres naturelles (1.1, 1.2, 1.3) parallèlement et les orienter dans le même sens qui est celui de la croissance des fibres naturelles,
b) assembler lesdits éléments en fibres naturelles entre eux pour former un module (2.1, 2.2).

2. Procédé de réalisation selon la revendication 1, **caractérisé en ce que** les éléments en fibres naturelles (1.1, 1.2, 1.3) sont des fils en fibres naturelles d'origine végétale.

3. Procédé de réalisation selon la revendication 1, **caractérisé en ce que** les éléments en fibres naturelles (1.1, 1.2, 1.3) sont des pièces en bois choisi parmi des planches en bois ou des poutres en bois.

4. Pièces en deux dimensions ou en trois dimensions en fibres naturelles comprenant un ou plusieurs modules (2.1, 2.2) réaiisé(s) selon l'une quelconque des revendications précédentes.

5. Ruche (10) **caractérisée en ce qu'**elle comporte des pièces selon la revendication 4 comprenant des modules (2.1, 2.2) réalisés selon les revendications 1 et 3 du procédé.

6. Ruche (10) selon la revendication 5, **caractérisée en ce qu'**elle comprend une pièce constituant le plancher (11.6), une pièce constituant le corps (11.5), une pièce constituant la hausse (11.4), une pièce constituant le couvre cadre (11.2), une pièce constituant le nourrisseur (11.3), une pièce constituant le toit (11.1).

7. Dalle **caractérisée en ce qu'**elle comporte des pièces selon la revendication 4.

8. Dessous de plat **caractérisé en ce qu'**il comporte des pièces selon la revendication 4.

9. Plateau de table **caractérisé en ce qu'**il comporte des pièces selon la revendication 4.

10. Set de table **caractérisé en ce qu'**il comporte des pièces selon la revendication 4.

11. Lit **caractérisé en ce qu'**il comporte une ou plusieurs pièces selon la revendication 4.

## Patentansprüche

1. Verfahren zur Herstellung von Modulen für die Produktion von zweidimensionalen oder dreidimensionalen Teilen aus Holz, wobei die Module Elemente aus natürlichen Fasern umfassen, **dadurch gekennzeichnet, dass** es die folgenden Schritte umfasst:
für jedes Modul,
a) paralleles Anordnen der Elemente aus natürlichen Fasern (1.1, 1.2, 1.3) und ihr Ausrichten in die gleiche Richtung, die diejenige des Wachstums der natürlichen Fasern ist,
b) Zusammenbauen der Elemente aus natürlichen Fasern untereinander, um ein Modul (2.1, 2.2) zu bilden.

2. Herstellungsverfahren nach Anspruch 1, **dadurch gekennzeichnet, dass** die Elemente aus natürlichen Fasern (1.1, 1.2, 1.3) Fäden aus natürlichen Fasern pflanzlichen Ursprungs sind.

3. Herstellungsverfahren nach Anspruch 1, **dadurch gekennzeichnet, dass** die Elemente aus natürlichen Fasern (1.1, 1.2, 1.3) Teile aus Holz sind, das aus Holzbrettern oder Holzbalken ausgewählt ist.

4. Zweidimensionale oder dreidimensionale Teile aus natürlichen Fasern, die ein oder mehrere Module (2.1, 2.2) umfassen, das/die nach einem der vorhergehenden Ansprüche hergestellt ist/sind.

5. Beute (10), **dadurch gekennzeichnet, dass** sie Teile nach Anspruch 4 umfasst, die Module (2.1, 2.2) umfassen, die nach den Ansprüchen 1 und 3 des Verfahrens hergestellt sind.

6. Beute (10) nach Anspruch 5, **dadurch gekennzeichnet, dass** sie ein Teil, das den Boden (11.6) bildet, ein Teil, das den Körper (11.5) bildet, ein Teil, das den Honigraum (11.4) bildet, ein Teil, das den Innendeckel (11.2) bildet, ein Teil, das die Futterzarge (11.3) bildet, und ein Teil umfasst, das das Dach (11.1) bildet.

7. Platte, **dadurch gekennzeichnet, dass** sie Teile nach Anspruch 4 umfasst.

8. Telleruntersetzer, **dadurch gekennzeichnet, dass** er Teile nach Anspruch 4 umfasst.

9. Tischplatte, **dadurch gekennzeichnet, dass** sie Teile nach Anspruch 4 umfasst.

10. Tischset, **dadurch gekennzeichnet, dass** es Teile nach Anspruch 4 umfasst.

11. Bett, **dadurch gekennzeichnet, dass** es ein oder mehrere Teile nach Anspruch 4 umfasst.

## Claims

1. A method for producing modules for the manufacture of two-dimensional or three-dimensional wooden parts, said modules comprising elements made of natural fibers, **characterized in that** it includes the following steps:
For each module,
a) arranging said natural fiber elements (1.1, 1.2, 1.3) in a parallel manner and orienting them in the same direction which is the direction of the growth of the natural fibers,
b) assembling said natural fiber elements together in order to form a module (2.1, 2.2).

2. The production method according to claim 1, **characterized in that** the natural fiber elements (1.1, 1.2, 1.3) are natural fiber yarns of vegetable origin.

3. The production method according to claim 1, **characterized in that** the natural fiber elements (1.1, 1.2, 1.3) are wooden parts chosen from wooden planks or wooden beams.

4. Two-dimensional or three-dimensional parts made of natural fibers comprising one or several modules (2.1, 2.2) produced according to any one of the preceding claims.

5. A hive (10) **characterized in that** it includes parts according to claim 4 comprising modules (2.1, 2.2) produced according to claims 1 and 3 of the method.

6. The hive (10) according to claim 5, **characterized in that** it comprises a part constituting the floor (11.6), a part constituting the body (11.5), a part constituting the super (11.4), a part constituting the frame cover (11.2), a part constituting the feeder (11.3), a part constituting the roof (11.1).

7. A slab **characterized in that** it includes parts according to claim 4.

8. A trivet **characterized in that** it includes parts according to claim 4.

9. A table top **characterized in that** it includes parts according to claim 4.

10. A place mat **characterized in that** it includes parts according to claim 4.

11. A bed **characterized in that** it includes one or several parts according to claim 4.
